# EUROPEAN PATENT APPLICATION

(11) **EP 0 738 632 A1**
(43) Date of publication of application: **23.10.1996**
(21) Application number: 96302762.8
(22) Date of filing: 19.04.1996
(51) Int. Cl.: B60R 21/26

(54) **Electrolysis fuel source for automotive airbag inflators**

(30) Priority: 21.04.1995 US 426312; 26.03.1996 US 620665
(71) Applicant: MORTON INTERNATIONAL, INC., Chicago, Illinois 60606 (US)
(72) Inventor: Johnson, Darrin L., Bountiful, Utah 84403 (US); Hussey, Brett, Bountiful, Utah 84010 (US)
(74) Representative: Bankes, Stephen Charles Digby

(57) **Abstract**

Electrolytic decomposition in a fuel cell (24) produces two products which can be recombined to produce heat useful in the inflation of an automotive airbag system in which a stored gas is heated while it is inflating the airbag. A preferred electrolytic solution (26) is aqueous. This is readily replenishable so that the heat producing electrolysis products are always available.

## Description

This invention relates to inflators for automotive airbag systems. More particularly, it relates to an improvement in inflation systems in which a gas stored under pressure is released to inflate an airbag and is heated to increase its volume during inflation of the air bag. In the system of the present invention the heat source comprises products of an electrolysis which decomposes an electrolytic solution into two products which may be recombined in a reaction which produces heat, the heat being available to heat the stored gas. The products of the electrolysis may be designated a fuel and an oxidizer and when the electrolytic solution is aqueous, the products hydrogen and oxygen. A particular advantage of the invention is that it may utilize a readily available material such as water which when electrolyzed provides a supply of fuel and oxidizer which can be replenished as needed in order to insure that the necessary supply is always available.

One recently issued United States Patent 5,348,344 describes apparatus for inflating a vehicle occupant restraint using a mixture of gases. In one embodiment shown as Figure 6 of the patent, hydrogen is stored under pressure in one container and oxygen is stored under pressure in another container. When it is desired to inflate the restraint, the two gases flow into a third container in which the hydrogen (fuel) is burned by reaction with the oxygen (oxidizer) to produce heat which assists in the expansion of the inflation gas stored in the fluid container.

The long term storage of some liquid and gaseous fuel and oxidizer in air bag inflation systems presents problems. Fuels such as hydrogen are difficult to store due to the propensity of hydrogen to diffuse through most storage container materials and seals. Also with some fuels, the fuel being stored tends to degrade from slow chemical reactions, possibly due to the presence of impurities in the fuel.

For these and other reasons it is desirable to provide a supply of fuel and or oxidizer which can be regenerated electrolytically either continuously or periodically from a readily available source, and which can be regenerated at will whenever the supply of either constituent is indicated to be insufficient.

### Summary of the Invention

Briefly the present invention utilizes electrolysis to provide a continuous or periodic supply of fuel and or oxidizer for an inflator. The invention utilizes a reservoir or fuel cell for an electrolytic solution which is converted to two products which can recombine to produce heat. The products may be designated a fuel and an oxidizer such as H₂ and O₂ produced by electrolysis of an aqueous solution. Either or both products of the electrolysis may be used depending on the heat producing reaction selected for the inflator design. Once the fuel and oxidizer are created by electrolysis, they can be held in storage chambers or in the electrolytic cell, either separately or mixed with other components until a combustion process is initiated for inflator operation e.g. as described in the above noted patent.

The fuel and/or oxidizer may be purged either periodically or continuously from its storage chamber as required by the system design.

Suitable sensing means are provided which, when the amounts of fuel (hydrogen) or oxidizer (oxygen) fall below desired levels, cause the electrolysis to resume so as to replenish the supply of fuel and or oxidizer. Additional sensing means may alert the operator of the vehicle to the need for adding water or other electrolyte to refill the electrolysis cell.

### Objects of the Invention

One object of the invention is to provide a system in which a readily replenishable source of oxidizer and fuel is utilized to provide oxidizer and/or fuel to a combustion process wherein inflation of an air bag is initiated.

A further object of the invention is to provide a fuel cell to produce fuel and oxidizer to a combustion process by which a stored gas is heated to inflate an airbag or other passenger restraint.

### Brief Description of the Drawings

These an other objects of the invention will become apparent or will be pointed out in the description which follows taken in conjunction with the drawings, in which:
Figure 1 is a schematic view of an inflation system according to the invention, and
Figure 2 is an enlarged sectional view of a fuel cell used in the device of Figure 1 taken on plane 2-2 of Figure 1.

### Description of the Preferred Embodiment

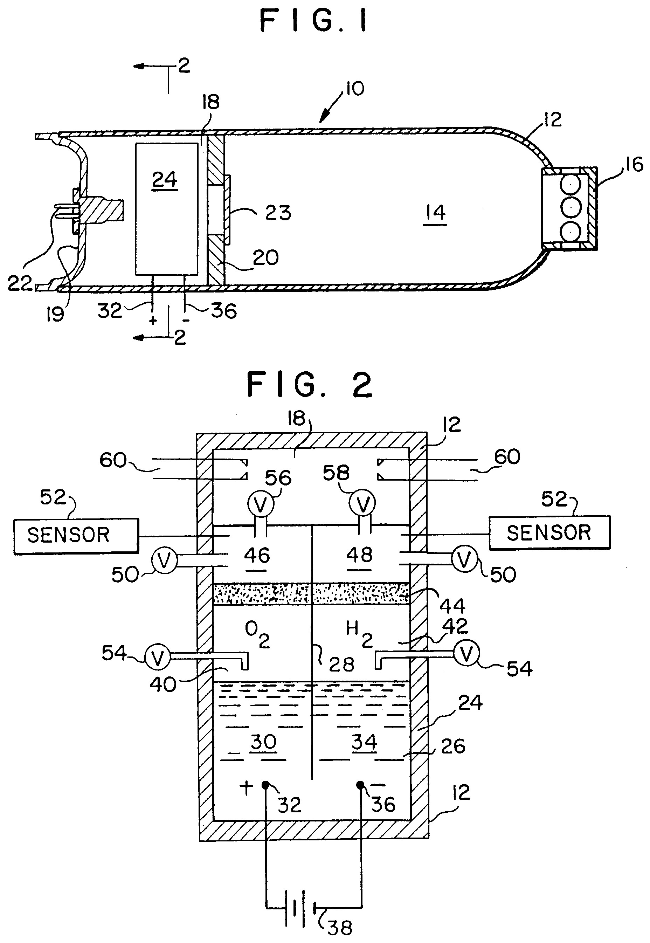

As seen in Figure 1 an inflator 10 includes a container 12 adapted to store an inert gas under pressure in a storage chamber 14. One end of container 12 is closed by a cap and diffuser 16 in a manner known in the art. The other end is closed by a plate 19. Toward said other end of container 12 is a barrier 20 which divides container 12 into two compartments, namely storage chamber 14 and a fuel cell compartment 18. Initiator pins and an initiator charge 22 are disposed in the plate 19 at the other end of container 12 in the usual way e.g. as shown in U.S. Patent 5,470,104 issued November 28, 1995. A rupture disc 23 in barrier 20 ruptures to connect chamber 14 and chamber 18 when the gas in chamber 18 is ignited and the pressure and temperature in chamber 18 increases.

Electrolytic fuel cell 24, shown in Figure 2, is disposed in compartment 18 of container 12. Fuel cell 24 contains an electrolytic solution 26 and a diaphragm 28 dividing the fuel cell into an anode compartment 30 into which an anode 32 extends and a cathode compartment 34 into which a cathode 36 extends. The anode and cathode are connected to a battery 38 or other source of electrical potential. Spaces 40, 42 are provided above the electrolytic solution 26 for collection of H₂ and O₂ produced by electrolysis when the solution is aqueous. A membrane 44 separates the spaces 40, 42 from storage chambers 46, 48. Each storage chamber is provided with a valved exhaust 50 to purge the chamber of stored gas in order that a fresh supply of fuel and oxidizer may be supplied at intervals to insure that a fresh and dependable mixture of fuel and oxidizer is available for combustion at all times. A sensor 52 may be provided to sense the composition, pressure and amount of fuel and/or oxidizer in each of storage chambers 46, 48 and to reinitiate the electrolysis when replenishment of fuel and/or oxidizer is required. Ports 54 in the fuel cell are provided for refilling the electrolytic solution when Sensor 52 indicates that this is necessary. Valved conduits 56, 58 connect storage chambers 46, 48 with compartment 18 to admit H₂ and O₂ into said compartment when actuated by a sensor (not shown).

By the present invention long term storage problems presented by fuel/oxidizer systems are overcome by providing a means to recharge the system with new fuel and oxidizer, as required.

Non-aqueous solutions may be substituted for the aqueous electrolytic solution in which case the electrolysis products may not be hydrogen and oxygen. However the products may be recombined to produce heat in the same manner as H₂ and O₂ are recombined.

The apparatus includes means such as a spark discharge 60 to ignite the combustible fuel/oxidizer mixture in compartment 18, such as that shown in US-A-5,470,104.

## Claims

1. An automotive vehicle air bag inflator apparatus (10) comprising:
an electrolytic fuel cell (24) for producing a fuel and an oxidizer by electrolysis of an electrolytic solution, said electrolytic fuel cell including a container, a means (28) dividing said container into an anode compartment (30) and a cathode compartment (34), an anode (32) disposed in said anode compartment, a cathode (36) disposed in said cathode compartment, an electrolytic solution (26) in said anode compartment and said cathode compartment in said container, a source of potential (38) and means connecting said source of potential to said anode and said cathode,
means (60) to combust said fuel and said oxidizer to generate heat and to produce products combustion, and means (23) to introduce said products of combustion into a stored inflation gas to heat said stored gas and means (16) to introduce said heated stored gas into an air bag to thereby inflate said air bag.

2. The apparatus of claim 1, including in addition means (46, 48) to store said fuel and said oxidizer.

3. The apparatus of claim 1 or claim 2, including in addition means (54) to replenish said electrolytic solution (26).

4. The apparatus of any preceding claim wherein the electrolytic solution (26) is aqueous and the fuel and oxidizer are hydrogen and oxygen respectively.

5. A method for inflating an inflatable automotive air bag in which a stored inflation gas is utilized to inflate said automotive air bag, characterised by the steps of:
electrolyzing an electrolytic solution (26) to produce electrolysis products comprising a fuel and an oxidizer, and separately collecting said fuel and said oxidizer;
recombining said fuel and said oxidizer, which have been produced by electrolysis of said electrolytic solution thereby producing heat and hot products of said recombination,
introducing said hot products into said stored gas to thereby heat said stored gas,
and introducing the resulting heated stored gas into said inflatable automotive air bag to inflate said air bag.

6. The method of claim 5 in which the electrolytic solution is aqueous and the fuel and oxidizer are H₂ and O₂ respectively.
